# EUROPEAN PATENT APPLICATION

(11) **EP 2 026 159 A2**
(43) Date of publication of application: **18.02.2009**
(21) Application number: 08161750.8
(22) Date of filing: 04.08.2008
(51) Int. Cl.: G05B 23/02

(54) **A method and system for automatically evaluating the performance of a power plant machine**

(30) Priority: 08.08.2007 US 835504
(71) Applicant: General Electric Company, Schenectady, NY 12345 (US)
(72) Inventor: Frank, Adam, Atlanta, GA 30318 (US); Schmitt, Thomas P., Chelsea, VT 05038 (US); Marriner, Brian, Glenville, NY 12302 (US); Stone, Kevin, Charlton, NY 12019 (US)
(74) Representative: Bedford, Grant Richard

(57) **Abstract**

A method and system for automatically evaluating the performance of a power plant machine 110 is provided. The method and system may include receiving a plurality of operating data 120 from the at least one power plant machine 110. The method and system may also store the plurality of operating data 120 in at least one data storage device 130. The method and system may also determine whether at least one performance indicator is within a range; and if the at least one performance indicator is outside of the range, then automatically notify a support network 150, 160.

## Description

The present invention relates generally to the performance of a power plant machine; and more particularly to a method and system for automatically determining the performance of a power plant machine.

A power plant typically includes at least one power plant machine. A power plant machine generally includes at least one of the following: a turbomachine (such as a gas turbine, a steam turbine, or the like); a heat recovery steam generator; a boiler; a condenser; a transformer; a feedwater heater; a boiler feed pump; and combinations thereof.

Power plant operators usually employ some form of monitoring and diagnostics (M&D) system, or the like, for use in determining the performance of the power plant machine. Currently known M&D systems tend to focus on the collection, and the transmission of the operating data to an off-site location where a third-party technical expert, such as a performance engineer, may evaluate the operating performance of the power plant machine.

There are a few problems with the currently known method of evaluating the performance of a power plant machine utilizing an M&D system. The currently known M&D systems may not automatically determine whether a performance issue exists. The currently known systems require an off-site technical expert to evaluate the operating data and to determine whether or not a performance issue may exist. The currently known systems generally do not include a rule or rules that, when met, may automatically notify a power plant operator of a potential performance issue.

For the foregoing reasons, there is a need for a method and system for automatically evaluating the performance of a power plant machine. The method should provide a plurality of rules, which may automatically notify the power plant machine operator upon detecting a potential performance issue. The method should not require an off-site technical expert to determine whether a performance issue may exist.

In accordance with an embodiment of the present invention, there is provided a method of automatically evaluating the performance of at least one power plant machine, the method comprising: providing an automatic performance evaluating system, wherein the automatic performance evaluating system is located approximately on-site where the at least one power plant machine is operated; receiving a plurality of operating data from the at least one power plant machine; storing the plurality of operating data in at least one data storage device; determining whether at least one performance indicator is within a range; and if the at least one performance indicator is outside of the range, then automatically notifying at least one support network.

In accordance with an embodiment of the present invention, there is provided a method of automatically evaluating the performance of at least one power plant machine, the method comprising: providing an automatic performance evaluating system, wherein the automatic performance evaluating system is located approximately on-site where the at least one power plant machine is operated; receiving a plurality of operating data from the at least one power plant machine, storing the plurality of operating data in at least one data storage device; determining whether at least one performance indicator is within a range; and if the at least one performance indicator is outside of the range, then automatically notifying at least one support network.

The method may further comprise: providing at least one rule for determining the status of the at least one performance indicator; and determining whether the at least one rule is met.

The method may also comprise selecting at least one rule to determine a notification; and providing the notification after the selected at least one rule is met.

The step of determining whether at least one performance indicator is within a range may further comprise utilizing an analysis engine, wherein the analysis engine comprises: organizing the plurality of operating data; determining whether the plurality of operating data is approximately at a steady state; generating a plurality of pseudo indicators; applying at least one filtering engine; applying at least one normalization engine; and applying at least one rule, wherein the rule determines the status of the at least one performance indicator.

The step of applying at least one filtering engine may also comprise: creating a rolling average of the operating data; and selecting a portion of the rolling average.

The step of applying at least one normalization engine may comprise normalizing the operating data to a performance baseline. Here, the performance baseline may comprise a turbomachine baseline, a combined cycle baseline, a combined cycle machine baseline, and combinations thereof.

In accordance with an alternate embodiment of the present invention, there is provided a system for automatically evaluating the performance of at least one power plant machine, the system comprising: an automatic performance evaluating system, wherein the automatic performance evaluating system is located approximately on-site where the at least one power plant machine is operated; means for receiving a plurality of operating data from the at least one power plant machine; means for storing the plurality of operating data in at least one data storage device; means for determining whether at least one performance indicator is within a range; means for automatically notifying at least one support network if the at least one performance indicator is outside of the range; means for providing at least one rule for determining the status of the at least one performance indicator; means for determining whether the at least one rule is met; means for selecting at least one rule to determine a notification; and means for providing the notification after the selected at least one rule is met.

The system may further comprise means for utilizing an analysis engine, wherein the analysis engine comprises: means for organizing the plurality of operating data; means for determining whether the plurality of operating data is approximately at a teady state; means for generating a plurality of pseudo indicators; means for applying at least one filtering engine; means for applying at least one normalization engine; and means for applying at least one rule, wherein the rule determines the status of the at least one performance indicator. Furthermore, the performance baseline comprises a turbomachine baseline, a combined cycle baseline, a combined cycle machine baseline, and combinations thereof.

Various aspects and embodiments of the present invention will now be described in connection with the accompanying drawings, in which:
Figure 1 is a schematic illustrating the environment in which an embodiment of the present invention operates.
Figure 2 is a flowchart illustrating an example of a method of automatically evaluating the performance of a power plant machine in accordance with an embodiment of the present invention.
Figure 3 is a flowchart illustrating an example of a method utilized by the analysis engine of step 230 in Figure 2, in accordance with an embodiment of the present invention.
Figure 4 is a block diagram of an exemplary system for automatically evaluating the performance of a power plant machine in accordance with an embodiment of the present invention.

As will be appreciated, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or " system. " Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a public purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The following detailed description of preferred embodiments refers to the accompanying drawings, which illustrate specific embodiments of the invention. Other embodiments having different structures and operations do not depart from the scope of the present invention.

An embodiment of the present invention takes the form of an application and process that has the technical effect of automatically evaluating the performance of a power plant machine. The present invention can be applied to many types of power plant machines, including: various forms of turbomachines, such as a gas turbine, a steam turbine, or the like; a heat recovery steam generator; a boiler; a condenser; a transformer; a feedwater heater; a boiler feed pump; and combinations thereof.

A performance indicator may be considered a specific data point that represents an instrument, device, or other signal, which may be used to determine the performance of the power plant machine. An M&D system may collect data (hereinafter operating data) corresponding to a specific performance indicator, while the power plant machine may be in operation. Typically a power plant machine has a plurality of performance indicators, and therefore a plurality of operating data that may be collected for performance evaluation. For example, but not limiting of, the name of the performance indicator representing the power output of a turbomachine may be DWATT. The corresponding operating data provides values for DWATT over a specified range of time.

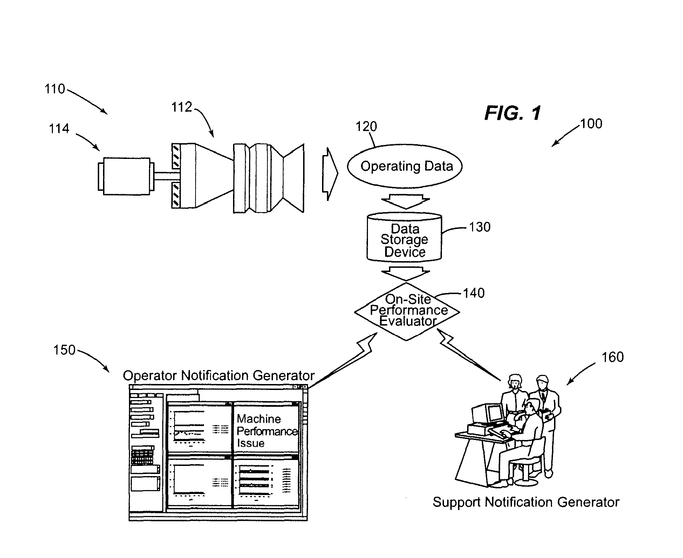

Referring now to the Figures, where the various numbers represent like elements throughout the several views, Figure 1 is a schematic illustrating the environment in which an embodiment of the present invention operates. Figure 1 illustrates a power plant site 100 comprising a power plant machine 110; a plurality of operating data 120; a data storage device 130; an on-site performance evaluator 140; an operator notification generator 150; and a support notification generator 160.

The power plant machine 110 may comprise a combustion turbine 112 connected to a generator 114. The power plant site 100 may comprise at least one control system or the like (not illustrated) which may receive a plurality of operating data 120 from the power plant machine 110. The plurality of operating data 120 may comprise a plurality of performance indicators including: power input, power output, fuel flow, airflow, fluid flow, and other operating data that may be used in evaluating the performance of the power plant machine 110.

The plurality of operating data 120 may be transmitted to at least one data storage device 130, which may, inter alia, collect, process, and store, the plurality of operating data 120. The data storage device 130 may be approximately located at the power plant site 100.

In an embodiment of the present invention, a data storage device 130 may transmit the plurality of operating data 120 to at least one on-site performance evaluator 140, which may also be approximately located at the power plant site 100.

The on-site performance evaluator 140 may utilize a plurality of rules, or the like, to automatically detect, the likelihood of a performance issue, in real time. Depending on the nature and severity of the performance issue, the on-site performance evaluator 140 may transmit the details of the issue to at least one operator notification generator 150 and/or at least one support notification generator 160.

The operator notification generator 150 may automatically provide the operator of the power plant machine with a notification of the performance issue. In an embodiment of the present invention, the notification may provide at least one recommendation for resolving the issue. The support notification generator 160 may automatically provide a third-party support system with the details of the discovered performance issue. Here, the third-party support system may be contacted if present invention determines that the performance issue requires the involvement of a performance expert.

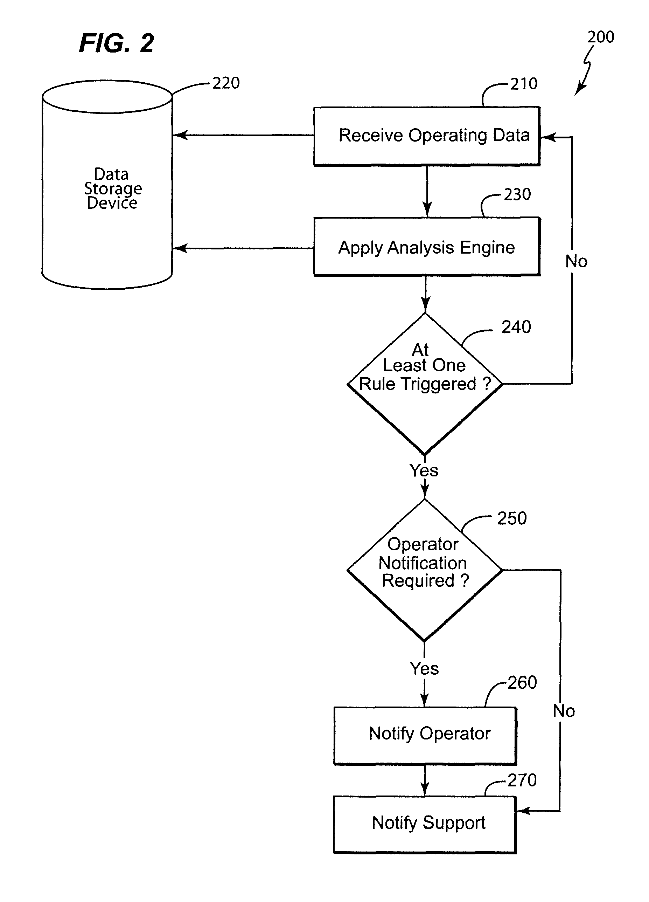

Referring now to Figure 2, which is a flowchart illustrating an example of a method 200 of automatically evaluating the performance of a power plant machine 110 in accordance with an embodiment of the present invention. In step 210, the method 200 may receive a plurality of operating data 120 from at least one power plant machine 110 (not illustrated in Figure 2). An embodiment of the present invention may allow for receiving the plurality of operating data 120 from multiple power plant machines. For example, but not limiting of, the method 200 in step 210 may receive the plurality of operating data 120 from a gas turbine, a heat recovery steam generator, and a steam turbine.

The plurality of operating data 120 may be received at different sampling rates, or the like, such as, but not limiting of the invention, one data point per second (1/sec) or one data point per thirty seconds (1/30 sec). Generally, during the operation of a power plant machine 110, certain operating data points may be used for monitoring purposes, while other operating data points may be used for controlling or other purposes that require a higher sampling rate. Here, to conserve the storage space which may be used to store the operating data 120, the operating data points used for monitoring may be received at a slower sampling rate, such as 1/30 sec. Furthermore, the operating data points used for controlling, may be received at a higher sampling rate, such as 1/sec. For example, but not limiting of, an operating data point used for monitoring the ambient temperature may be received at a slower sampling rate, such as 1/30 sec; and an operating data point used for controlling a critical flow rate may be received at a higher sampling rate, such as 1/ sec.

In step 220, the plurality of operating data 120 received in step 210 may be transmitted to at least one data storage device 130. An embodiment of the present invention may allow for a plurality of data storage devices 130. For example, but not limiting of, a separate data storage device 130 may be designated for each power plant machine 110 on a power plant site. The data storage device 130 may be approximately located on the power plant site 100.

As discussed, a power plant machine 110 generally includes at least one control system, or the like, which typically receives the plurality of operating data 120. In step 230, the method 200 may apply at least one analysis engine to the plurality of operating data corresponding to the performance indicators. Generally, the analysis engine may evaluate, in real-time, the status of at least one performance indicator. The evaluation may determine whether or not the at least one performance indicator is within a specified range. The performance indicators may include: power input, power output, fuel flow, airflow, fluid flow, and other operating data that may be used to directly or indirectly evaluate the performance of the power plant machine 110.

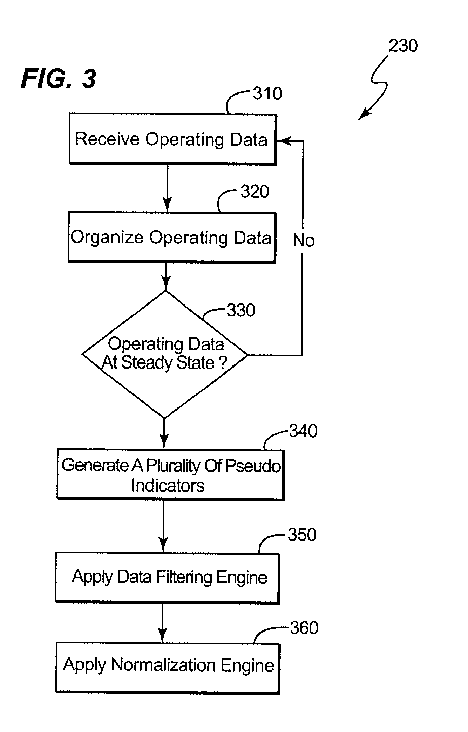

In an embodiment of the present invention a user, such as but not limiting of, an operator, a support expert, or the like; may select which of the plurality of operating data 120 may be associated with a performance indicator. For example, but not limiting of, an operator may select the signal name for power plant output (DWATT, or the like) as the performance indicator. Here, the method 200, in step 230 may apply the at least one analysis engine to the plurality of operating data 120 corresponding to the DWATT signal. As discussed in Figure 3, the analysis engine may organize, filter, and normalize the plurality of operating data 120 for DWATT.

The method 200, in step 230, may also transmit the plurality of operating data 120 to the at least one data storage device of step 220.

In step 240, the method 200 may determine whether or not at least one rule of a plurality of rules is met. Each rule of the plurality of rules may be associated with a specific performance related issue. For example, but not limiting of, a rule may be associated with a DWATT signal. Here, if the DWATT signal is not within a specified range, the rule may be met. An embodiment of the present invention may allow for a third-party support expert, or the like, to define or modify each rule of the plurality rules. An alternate embodiment of the present invention may provide for the operator of the power plant machine 110 to define or modify each rule of the plurality rules. An embodiment of the present invention may utilize at least one math engine to determine whether the performance indicator may be within the specified range. The math engine may also perform a plurality of statistically tests, including: normality testing; SPC rules or the like; confidence intervals; etc.

If at least one rule was met in step 240, then the method 200, may proceed to step 250, otherwise the method 200 may revert to step 210.

In step 250, the method 200, may determine whether or not at least one operator notification is required. The operator notification may alert the operator of the power plant machine 110 of a potential performance issue. An embodiment of the present invention may allow for the operator of the power plant machine 110 to select which of the plurality of rules, if met, requires an immediate notification. This feature may be very useful when monitoring a specific performance indicator associated to a rule. For example, but not limiting of, if the DWATT signal is associated with a rule, which is met, the method 200, may automatically generate a notification. If at least one operator notification is required then the method 200, may proceed to step 260, otherwise the method 200 may proceed to step 270.

In step 260, the method 200 may automatically generate an operator notification of a potential performance issue. The operator notification may inform the operator of the power plant machine 110 of a plurality of operating conditions related to the potential performance issue. The operator notification may also provide recommendations for investigating the performance issue. For example, but not limiting of, an operator notification informing the operator of an issue with the DWATT signal may provide a recommendation on how to determine whether the issue may be a fault with the DWATT signal or a true performance issue with the power plant machine 110.

In step 270, the method 200 may automatically notify a support system of the potential performance issue. The support system may include a performance expert. The expert may analyze the plurality of operating data 120 to develop a root cause analysis, or the like, of the performance issue. The support system may be a third-party service of which the operator of the power plant machine 110 subscribes. For example, but not limiting of, the support system may be provided by the original equipment manufacturer (OEM), or the like.

Referring now to Figure 3, which is a flowchart illustrating an example of a method 300 utilized by the analysis engine of step 230 in Figure 2, in accordance with an embodiment of the present invention. In step 310, the method 300 may receive a plurality of operating data 120, as discussed in step 210 of Figure 2.

In step 320, the method 300 may organize the operating data 120 to allow for further processing. The organizing may include arranging the unprocessed, or raw, plurality of operating data 120 into a format allowing for averaging, or other mathematical processing. For example, but not limiting of, in step 320, the raw data may be segmented into blocks, or the like, whereby each block corresponds to a distinct performance indicator.

In step 330, the method 300, may determine whether or not the received plurality of operating data 120 is approximately at a "steady state". Steady state refers to an operating condition where the power plant machine 110 may be experiencing minimal mechanical, electrical, chemical, or thermal transients. The method 300 may utilize at least one calculation, such as averaging, to determine whether or not the plurality of operating data 120 is approximately at a steady state. For example, but not limiting of, the plurality of operating data 120 may be considered approximately at a steady state if the values in data does not fluctuate outside of a +/- 5% band over a 10 minute period.

After step 330 determines that the plurality of operating data may be approximately at a steady state, the method 300 may apply at least one averaging method to the plurality of operating data 120. The averaged plurality of operating data 120 may then be transmitted to step 340 for further processing. This averaging method may increase the accuracy of the analysis engine 230 by possibly ensuring the uniformity of the data. The averaging method may include for example, but not limiting of, calculating 10 minutes averages of the raw plurality of operating data 120 and then selecting one data point every 5 minutes from the 10-minute averaged data. If the plurality of operating data 120 is approximately at a steady state, then the method 300 may proceed to step 340; otherwise the method 300 may revert to step 310.

In step 340, the method 300 may generate a plurality of pseudo indicators. A pseudo indicator may be considered any calculated parameter that may not be directly measured; such as, but not limiting of: corrected performance parameters, intermediate flow calculations, or the like. For example, but not limiting of, in a gas turbine, the compressor discharge pressure (CPD) is a performance indicator. The value of CPD may be used to calculate the pseudo indicator CPD_ABS (compressor discharge pressure accounting for a giving barometric pressure).

In step 350, the method 300 may apply at least one data-filtering engine. The data-filtering engine may ensure that the best available data may be used to evaluate the performance of the power plant machine 110. The data-filtering engine may compare similar groups of data corresponding to a performance indicator and a pseudo indicator. The data-filtering engine may select a portion of the plurality of operating data 120 corresponding to the pseudo indicators; and may select a portion of the plurality of operating data 120 corresponding to the performance indicator (the raw data). For example, but not limiting of, the data-filtering engine may compare the operating data from the CPD performance indicator, and the CPD_ABS pseudo indicator; to determining which data set may provide the more accurate performance analysis.

In step 360, the method 300 may apply at least one normalization engine. A normalization engine may determine the performance of a power plant machine 110 under a standard reference model, or the like (typically ISO conditions). The present invention may provide a specific normalization engine for a specific type of power plant machine. For example, but not limiting of, the present invention may include a separate normalization engine for a gas turbine, a steam turbine, and the like; and combinations thereof.

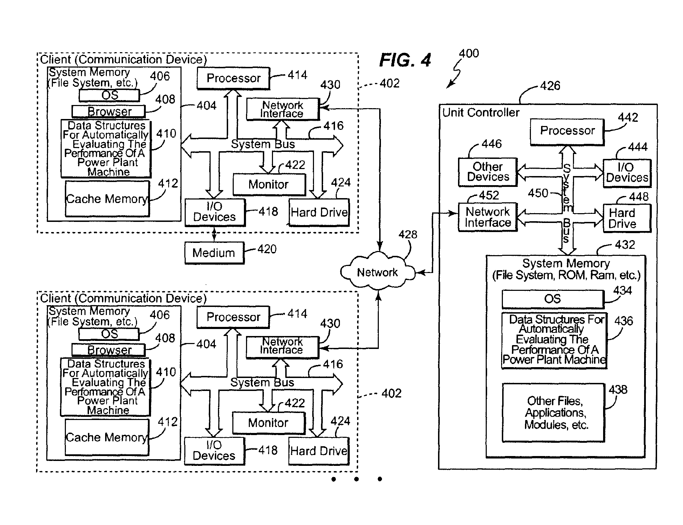

Referring now to Figure 4, which is a step diagram of an exemplary system 400 for automatically evaluating the performance of a power plant machine 110 in accordance with an embodiment of the present invention. The elements of the methods 200 & 300 may be embodied in and performed by the system 400. The system 400 may include one or more user or client communication devices 402 or similar systems or devices (two are illustrated in Figure 4). Each communication device 402 may be for example, but not limited to, a computer system, a personal digital assistant, a cellular phone, or similar device capable of sending and receiving an electronic message.

The communication device 402 may include a system memory 404 or local file system. The system memory 404 may include for example, but is not limited to, a read only memory (ROM) and a random access memory (RAM). The ROM may include a basic input/output system (BIOS). The BIOS may contain basic routines that help to transfer information between elements or components of the communication device 402. The system memory 404 may contain an operating system 406 to control overall operation of the communication device 402. The system memory 404 may also include a browser 408 or web browser. The system memory 404 may also include data structures 410 or computer-executable code to automatically evaluate the performance of a power plant machine 110 that may be similar or include elements of the method 200 in Figure 2 and the method 300 in Figure 3.

The system memory 404 may further include a template cache memory 412, which may be used in conjunction with the method 200 in Figure 2 and the method 300 in Figure 3, to automatically evaluate the performance of a power plant machine.

The communication device 402 may also include a processor or processing unit 414 to control operations of the other components of the communication device 402. The operating system 406, browser 408, data structures 410 may be operable on the processor 414. The processor 414 may be coupled to the memory system 404 and other components of the communication device 402 by a system bus 416.

The communication device 402 may also include multiple input devices (I/O), output devices or combination input/output devices 418. Each input/output device 418 may be coupled to the system bus 416 by an input/output interface (not shown in Figure 4). The input and output devices or combination I/O devices 418 permit a user to operate and interface with the communication device 402 and to control operation of the browser 408 and data structures 410 to access, operate and control the software to automatically evaluate the performance of a power plant machine. The I/O devices 418 may include a keyboard and computer pointing device or the like to perform the operations discussed herein.

The I/O devices 418 may also include for example, but are not limited to, disk drives, optical, mechanical, magnetic, or infrared input/output devices, modems or the like. The I/O devices 418 may be used to access a medium 420. The medium 420 may contain, store, communicate, or transport computer-readable or computer-executable instructions or other information for use by or in connection with a system, such as the communication devices 402.

The communication device 402 may also include or be connected to other devices, such as a display or monitor 422. The monitor 422 may be used to permit the user to interface with the communication device 402.

The communication device 402 may also include a hard disk drive 424. The hard drive 424 may be coupled to the system bus 416 by a hard drive interface (not shown in Figure 4). The hard drive 424 may also form part of the local file system or system memory 404. Programs, software, and data may be transferred and exchanged between the system memory 404 and the hard drive 424 for operation of the communication device 402.

The communication device 402 may communicate with a remote server 426 and may access other servers or other communication devices similar to communication device 402 via a network 428. The system bus 416 may be coupled to the network 428 by a network interface 430. The network interface 430 may be a modem, Ethernet card, router, gateway, or the like for coupling to the network 428. The coupling may be a wired or wireless connection. The network 428 may be the Internet, private network, an intranet, or the like.

The server 426 may also include a system memory 432 that may include a file system, ROM, RAM, and the like. The system memory 432 may include an operating system 434 similar to operating system 406 in communication devices 402. The system memory 432 may also include data structures 436 automatically evaluating the performance of a power plant machine. The data structures 436 may include operations similar to those described with respect to the method 100 for automatically evaluating the performance of a power plant machine. The server system memory 432 may also include other files 438, applications, modules, and the like.

The server 426 may also include a processor 442 or a processing unit to control operation of other devices in the server 426. The server 426 may also include I/O device 444. The I/O devices 444 may be similar to I/O devices 418 of communication devices 402. The server 426 may further include other devices 446, such as a monitor or the like to provide an interface along with the I/O devices 444 to the server 426. The server 426 may also include a hard disk drive 448. A system bus 450 may connect the different components of the server 426. A network interface 452 may couple the server 426 to the network 428 via the system bus 450.

The flowcharts and step diagrams in the Figures illustrate the architecture, functionality, and operation of possible implementations of systems, methods, and computer program products according to various embodiments of the present invention. In this regard, each step in the flowchart or step diagrams may represent a module, segment, or portion of code, which comprises one or more executable instructions for implementing the specified logical function(s). It should also be noted that, in some alternative implementations, the functions noted in the step may occur out of the order noted in the figures. For example, two steps shown in succession may, in fact, be executed substantially concurrently, or the steps may sometimes be executed in the reverse order, depending upon the functionality involved. It will also be noted that each step of the step diagrams and/or flowchart illustration, and combinations of steps in the step diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, it should be appreciated that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method of automatically evaluating the performance of at least one power plant machine (110), the method comprising:
providing an automatic performance evaluating system (140), wherein the automatic performance evaluating system (140) is located approximately on-site (100) where the at least one power plant machine (110) is operated;
receiving a plurality of operating data (120) from the at least one power plant machine (110,210);
storing the plurality of operating data (120) in at least one data storage device (130,220);
determining whether at least one performance indicator is within a range (230,240,250); and
if the at least one performance indicator is outside of the range, then automatically notifying at least one support network (260,270).

2. The method of claim 1 further comprising:
providing at least one rule for determining the status of the at least one performance indicator (240); and
determining whether the at least one rule is met (240).

3. The method of any preceding claim further comprising:
selecting at least one rule to determine a notification (240); and
providing the notification after the selected at least one rule is met (260,270).

4. The method of any preceding claim, wherein the step of determining whether at least one performance indicator is within a range (240) further comprises utilizing an analysis engine (230), wherein the analysis engine comprises:
organizing the plurality of operating data (120,320);
determining whether the plurality of operating data (120) is approximately at a steady state (330);
generating a plurality of pseudo indicators (340);
applying at least one filtering engine (350);
applying at least one normalization engine (360); and
applying at least one rule, wherein the rule determines the status of the at least one performance indicator (240).

5. The method of claim 4, wherein the step of applying at least one filtering engine (350) comprises:
creating a rolling average of the operating data (120); and
selecting a portion of the rolling average.

6. The method of claim 4 or claim 5, wherein the step of applying at least one normalization engine (360) comprises normalizing the operating data (120) to a performance baseline.

7. The method of claim 6, wherein the performance baseline comprises a turbomachine baseline, a combined cycle baseline, a combined cycle machine baseline, and combinations thereof.

8. A system for automatically evaluating the performance of at least one power plant machine (110), the system comprising:
an automatic performance evaluating system (140), wherein the automatic performance evaluating system (140) is located approximately on-site (100) where the at least one power plant machine (110) is operated;
means for receiving a plurality of operating data (120) from the at least one power plant machine (110);
means for storing the plurality of operating data (120) in at least one data storage device (130);
means for determining whether at least one performance indicator is within a range;
means for automatically notifying at least one support network (150,160) if the at least one performance indicator is outside of the range;
means for providing at least one rule for determining the status of the at least one performance indicator;
means for determining whether the at least one rule is met;
means for selecting at least one rule to determine a notification (150,160); and
means for providing the notification (150,160) after the selected at least one rule is met.

9. The system of claim 8, wherein the step of determining whether at least one performance indicator is within a range further comprises means for utilizing an analysis engine, wherein the analysis engine comprises:
means for organizing the plurality of operating data (120);
means for determining whether the plurality of operating data (120) is approximately at a steady state;
means for generating a plurality of pseudo indicators;
means for applying at least one filtering engine;
means for applying at least one normalization engine; and
means for applying at least one rule, wherein the rule determines the status of the at least one performance indicator.

10. The system of claim 8 or claim 9, wherein the performance baseline comprises a turbomachine baseline, a combined cycle baseline, a combined cycle machine baseline, and combinations thereof.
